# EUROPEAN PATENT APPLICATION

(11) **EP 4 822 634 A1**
(43) Date of publication of application: **14.10.2026**
(21) Application number: 26164654.1
(22) Date of filing: 13.03.2026
(51) Int. Cl.: G06Q 40/08

(54) **DYNAMIC RISK PROFILING USING GRAPH-BASED DIGITAL TWIN NETWORK AND GENERATIVE ARTIFICIAL INTELLIGENCE FOR AGRICULTURAL INSURANCE**

(30) Priority: 08.04.2025 IN 202521034475
(71) Applicant: Tata Consultancy Services Limited, Maharashtra (IN)
(72) Inventor: ACHARYA, Kunja Behari, 751024 Bhubaneswar, Odisha (IN); IYER, Vivek, 411057 Pune, Maharashtra (IN); SOREN, John Sunil, 122004 Gurugram, Haryana (IN); PANIGRAHI, Sanjaya Kumar, 751024 Bhubaneswar, Odisha (IN); RAMAR, Rajesh, 560066 Bangalore, Karnataka (IN)
(74) Representative: Goddar, Heinz J.

(57) **Abstract**

The present disclosure leverages a graph-based digital twin network and generative artificial intelligence for solving problems of generalized and static risk assessments to create a dynamic risk profile by combining intrinsic farm risks with propagated risks from neighboring farms. This ensures that risk assessments reflect both local and networked influences. The dynamic risk profile is continuously adapted based on real-time data and interconnected farm relationships. Each farm is modeled as a node in the graph-based digital twin network, where edges represent risk propagation pathways influenced by factors such as pest migration, shared resources, and weather dependencies. Further, a real-time, dynamic premium recalibration is implemented for addressing inefficiencies of static premium model, based on the dynamic risk profile, compliance of farm users with risk mitigation advisory recommendations, and unforeseen risk factors. Furthermore, claims validation is performed by integrating remote sensing, IoT sensor data, and crowd-sourced inputs to resolve inaccuracies and fraud.

## Description

### CROSS-REFERENCE TO RELATED APPLICATIONS AND PRIORITY

The present application claims priority to Indian application no. 202521034475, filed on April 08, 2025.

### TECHNICAL FIELD

The disclosure herein generally relates to the field of agricultural insurance, and, more particularly, to dynamic risk profiling using graph-based digital twin network and generative artificial intelligence for agricultural insurance.

### BACKGROUND

Agricultural insurance is an essential tool for farmers to protect themselves against unpredictable risks such as weather extremes, pest outbreaks, and crop failures. These risks can have devastating economic consequences, particularly in an era where climate change is causing more frequent and severe disruptions to agricultural productivity. Farmers face increasing challenges such as prolonged droughts, unseasonal rains, pest infestations, and soil degradation, all of which threaten their livelihoods and food security globally.

Traditional agricultural insurance systems were designed to mitigate these risks by providing financial compensation for losses. However, these systems have primarily relied on historical data and regional averages for risk assessment and premium calculation. For example, insurers often determine premiums based on average crop yields in a region over the past 5-10 years. This generalized approach fails to account for diverse and dynamic conditions of individual farms. Each farm operates as a unique ecosystem, influenced by microclimatic variations, soil health, crop types, and farming practices. As a result, traditional systems often overestimate or underestimate risks, leading to inefficiencies and inequities in premium pricing. Moreover, existing systems are predominantly reactive in nature. They focus on compensating farmers after a loss rather than helping them mitigate risks proactively. Claims validation processes in these systems are heavily manual, involving field inspections and farmer-submitted reports, which are time-consuming, costly, and prone to errors or fraud. These inefficiencies erode trust between farmers and insurers, further reducing adoption of agricultural insurance, especially in underserved regions.

With advancements in technology, new opportunities have emerged to revolutionize agricultural insurance. The proliferation of IoT devices, satellite imagery, and machine learning models offers a potential for real-time data collection and analysis, enabling more accurate risk assessments. For example, Internet of Things (IoT) sensors can monitor soil moisture, temperature, and pest activity, while satellite imagery can provide vegetation health indices like Normalized difference vegetation index (NDVI). Additionally, Generative Artificial Intelligence (GenAI) models and predictive analytics allow insurers to simulate future risks such as droughts or pest outbreaks, enabling proactive risk management. Despite these technological advancements, current systems fail to integrate these tools into a cohesive framework. Existing solutions often operate in silos, where data from IoT sensors, satellite imagery, and historical records are used independently rather than holistically.

Another critical aspect of agricultural insurance that remains largely unaddressed is the interconnected nature of farms. Farms in a region are not isolated; they share environmental risks, such as pest migrations, water resource depletion, and weather patterns. However, existing systems treat farms as individual entities, ignoring the cascading effects of risks within a network of farms. For instance, a pest outbreak in one farm can quickly spread to neighboring farms, amplifying the overall risk. Similarly, over-irrigation by upstream farms can deplete water resources for downstream farms. Furthermore, a significant portion of farmers, particularly smallholders in low-connectivity or underserved regions, are excluded from advanced agricultural insurance programs due to the high costs of administration and lack of infrastructure. This digital divide worsen inequalities in access to financial protection, leaving these farmers more vulnerable to losses. Given these challenges, there is a pressing need for an integrated, technology-driven solution to transform agricultural insurance.

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising: creating, via one or more processors, a digital twin for (i) a target farm and (ii) each of a plurality of neighboring farms surrounding the target farm, by aggregating a plurality of data pertaining to the target farm and the plurality of neighboring farms obtained from a plurality of data sources; creating, via the one or more processors, a graph-based digital twin network based on an interconnection among the digital twin for the target farm and the digital twin of each of the plurality of neighboring farms, wherein the graph-based digital twin network comprises a plurality of nodes and a plurality of weighted edges, and wherein a specific node from the plurality of nodes represents the digital twin of the target farm and each of a plurality of remaining nodes from the plurality of nodes represents each of the plurality of neighboring farms, and wherein each of the plurality of weighted edges represent (i) one or more relationships, (ii) one or more inter-farm dependencies, and (iii) one or more cascading risk propagation pathways among the target farm and each of the plurality of neighboring farms in the graph-based digital twin network; predicting, via the one or more processors, a plurality of risk scenarios for the target farm and each of the plurality of neighboring farms using (i) one or more Artificial Intelligence (AI) based models and (ii) a Generative Artificial Intelligence (GenAI) based model, wherein (i) the one or more AI based models and the GenAI based model utilize a plurality of historical and real-time data streams obtained from the graph-based digital twin network for predicting the plurality of risk scenarios; generating, via the one or more processors, a dynamic risk profile for the target farm and each of the plurality of neighboring farms based on (i) the plurality of predicted risk scenarios and (ii) the plurality of real-time data streams obtained from the graph-based digital twin network, which is dynamically updated, wherein the dynamic risk profile focuses on continuously assessing one or more risk levels associated with the target farm and each of the plurality of neighboring farms based on one or more risk parameters; generating, via the one or more processors, one or more risk mitigation advisory recommendations based on the dynamic risk profile, wherein the one or more risk mitigation advisory recommendations are dynamically updated based on (i) one or more observed compliance patterns received based on the monitoring and surveillance and (ii) one or more real-time changes in one or more risk conditions that enable one or more stakeholders to take one or more preemptive actions; computing, via the one or more processors, a dynamically adjusted insurance premium amount based on (i) the dynamic risk profile of the target farm and (ii) a farm user compliance to take the one or more preemptive actions in accordance with the one or more risk mitigation advisory recommendations; generating, via the one or more processors, a confidence score for one or more insurance claim requests received from the one or more farm users for the target farm based on the dynamic risk profile, a network-wide risk propagation, and the farm user compliance with the one or more risk mitigation advisory recommendations; and validating, via the one or more processors, the one or more insurance claim requests based on the confidence score to identify one or more fraudulent insurance claim requests.

In another aspect, a system is provided. The system comprises a memory storing instructions; one or more communication interfaces; and one or more hardware processors coupled to the memory via the one or more communication interfaces, wherein the one or more hardware processors are configured by the instructions to: create a digital twin for (i) a target farm and (ii) each of a plurality of neighboring farms surrounding the target farm, by aggregating a plurality of data pertaining to the target farm and the plurality of neighboring farms obtained from a plurality of data sources; create a graph-based digital twin network based on an interconnection among the digital twin for the target farm and the digital twin of each of the plurality of neighboring farms, wherein the graph-based digital twin network comprises a plurality of nodes and a plurality of weighted edges, and wherein a specific node from the plurality of nodes represents the digital twin of the target farm and each of a plurality of remaining nodes from the plurality of nodes represents each of the plurality of neighboring farms, and wherein each of the plurality of weighted edges represent (i) one or more relationships, (ii) one or more inter-farm dependencies, and (iii) one or more cascading risk propagation pathways among the target farm and each of the plurality of neighboring farms in the graph-based digital twin network; predict a plurality of risk scenarios for the target farm and each of the plurality of neighboring farms using (i) one or more Artificial Intelligence (AI) based models and (ii) a Generative Artificial Intelligence (GenAI) based model, wherein (i) the one or more Artificial Intelligence based models and the GenAI based model utilize a plurality of historical and real-time data streams obtained from the graph-based digital twin network for predicting the plurality of risk scenarios; generate a dynamic risk profile for the target farm and each of the plurality of neighboring farms based on (i) the plurality of predicted risk scenarios and (ii) the plurality of real-time data streams obtained from the graph-based digital twin network, which is dynamically updated, wherein the dynamic risk profile focuses on continuously assessing one or more risk levels associated with the target farm and each of the plurality of neighboring farms based on one or more risk parameters; generate one or more risk mitigation advisory recommendations based on the dynamic risk profile, wherein the one or more risk mitigation advisory recommendations are dynamically updated based on (i) one or more observed compliance patterns received based on the monitoring and surveillance and (ii) one or more real-time changes in one or more risk conditions that enables one or more stakeholders to take one or more preemptive actions; compute a dynamically adjusted insurance premium amount based on (i) the dynamic risk profile of the target farm and (ii) a farm user compliance to take the one or more preemptive actions in accordance with the one or more risk mitigation advisory recommendations; generate a confidence score for one or more insurance claim requests received from the one or more farm users for the target farm based on the dynamic risk profile, a network-wide risk propagation, and the farm user compliance with the one or more risk mitigation advisory recommendations; and validate the one or more insurance claim requests based on the confidence score to identify one or more fraudulent insurance claim requests.

In yet another aspect, a non-transitory computer readable medium is provided. The non-transitory computer readable medium are configured by instructions for creating a digital twin for (i) a target farm and (ii) each of a plurality of neighboring farms surrounding the target farm, by aggregating a plurality of data pertaining to the target farm and the plurality of neighboring farms obtained from a plurality of data sources; creating a graph-based digital twin network based on an interconnection among the digital twin for the target farm and the digital twin of each of the plurality of neighboring farms, wherein the graph-based digital twin network comprises a plurality of nodes and a plurality of weighted edges, and wherein a specific node from the plurality of nodes represents the digital twin of the target farm and each of a plurality of remaining nodes from the plurality of nodes represents each of the plurality of neighboring farms, and wherein each of the plurality of weighted edges represent (i) one or more relationships, (ii) one or more inter-farm dependencies, and (iii) one or more cascading risk propagation pathways among the target farm and each of the plurality of neighboring farms in the graph-based digital twin network; predicting a plurality of risk scenarios for the target farm and each of the plurality of neighboring farms using (i) one or more Artificial Intelligence (AI) based models and (ii) a Generative Artificial Intelligence (GenAI) based model, wherein (i) the one or more AI based models and the GenAI based model utilize a plurality of historical and real-time data streams obtained from the graph-based digital twin network for predicting the plurality of risk scenarios; generating a dynamic risk profile for the target farm and each of the plurality of neighboring farms based on (i) the plurality of predicted risk scenarios and (ii) the plurality of real-time data streams obtained from the graph-based digital twin network, which is dynamically updated, wherein the dynamic risk profile focuses on continuously assessing one or more risk levels associated with the target farm and each of the plurality of neighboring farms based on one or more risk parameters; generating one or more risk mitigation advisory recommendations based on the dynamic risk profile, wherein the one or more risk mitigation advisory recommendations are dynamically updated based on (i) one or more observed compliance patterns received based on the monitoring and surveillance and (ii) one or more real-time changes in one or more risk conditions that enable one or more stakeholders to take one or more preemptive actions; computing a dynamically adjusted insurance premium amount based on (i) the dynamic risk profile of the target farm and (ii) a farm user compliance to take the one or more preemptive actions in accordance with the one or more risk mitigation advisory recommendations; generating a confidence score for one or more insurance claim requests received from the one or more farm users for the target farm based on the dynamic risk profile, a network-wide risk propagation, and the farm user compliance with the one or more risk mitigation advisory recommendations; and validating the one or more insurance claim requests based on the confidence score to identify one or more fraudulent insurance claim requests.

In accordance with an embodiment of the present disclosure, an effectiveness of the one or more risk mitigation advisory recommendations is continuously evaluated by comparing (i) one or more pre-risk mitigation advisory recommendation conditions and (ii) one or more post-risk mitigation advisory recommendation conditions, using a feedback loop mechanism.

In accordance with an embodiment of the present disclosure, the feedback loop mechanism utilizes (i) one or more Reinforcement Learning (RL) models and (ii) one or more evaluation metrics to evaluate the effectiveness of the one or more risk mitigation advisory recommendations.

In accordance with an embodiment of the present disclosure, the dynamically adjusted insurance premium amount utilizes one or more real-time network influence effects for dynamically adjusting the dynamic risk profile of the target farm based on each of the plurality of weighted edges.

In accordance with an embodiment of the present disclosure, the farm user compliance to take the one or more preemptive actions is continuously monitored using at least one of one or more sensors, one or more image acquisition devices, and one or more mobile applications.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for dynamic risk profiling using graph-based digital twin network and generative artificial intelligence for agricultural insurance, according to some embodiments of the present disclosure.
FIGS. 2A and 2B illustrate an exemplary flow diagram illustrating a method for dynamic risk profiling using graph-based digital twin network and generative artificial intelligence for agricultural insurance, in accordance with some embodiments of the present disclosure.
FIG. 3 depicts a diagram illustrating an example representation of a physical network of a farm with corresponding digital twin of farms, in accordance with some embodiments of the present disclosure.
FIG. 4 depicts an exemplary diagram illustrating a sample graph-based digital twin network, in accordance with some embodiments of the present disclosure.
FIG. 5 depicts a diagram illustrating an interaction of various stakeholders through the graph-based digital twin network of farms, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

With advancements in technology, new opportunities have emerged to revolutionize agricultural insurance. The proliferation of IoT devices, satellite imagery, and machine learning models offers a potential for real-time data collection and analysis, enabling more accurate risk assessments. For example, IoT sensors can monitor soil moisture, temperature, and pest activity, while satellite imagery can provide vegetation health indices like NDVI. Additionally, generative artificial intelligence (AI) models and predictive analytics allow insurers to simulate future risks such as droughts or pest outbreaks, enabling proactive risk management. Despite these technological advancements, current systems fail to integrate these tools into a cohesive framework. Existing solutions often operate in silos, where data from IoT sensors, satellite imagery, and historical records are used independently rather than holistically. This fragmented approach limits the ability to derive meaningful insights and implement adaptive insurance mechanisms, such as dynamic premium adjustments or proactive risk mitigation advisory recommendations.

Another critical aspect of agricultural insurance that remains largely unaddressed is the interconnected nature of farms. Farms in a region are not isolated; they share environmental risks, such as pest migrations, water resource depletion, and weather patterns. However, existing systems treat farms as individual entities, ignoring the cascading effects of risks within a network of farms. For instance, a pest outbreak in one farm can quickly spread to neighboring farms, amplifying the overall risk. Similarly, over-irrigation by upstream farms can deplete water resources for downstream farms. Furthermore, a significant portion of farmers, particularly smallholders in low-connectivity or underserved regions, are excluded from advanced agricultural insurance programs due to the high costs of administration and lack of infrastructure. This digital divide worsen inequalities in access to financial protection, leaving these farmers more vulnerable to losses. Given these challenges, there is a pressing need for an integrated, technology-driven solution that leverages real-time data, predictive analytics, and networked systems to transform agricultural insurance. Such a solution must address unique complexities of agriculture, including its dynamic risks, spatial variability, and interdependencies among farms.

The present disclosure addresses the unresolved problem of the conventional methods by incorporating tools like network of digital twins, generative AI, and multi-source data integration to provide tailored, proactive, and efficient insurance solutions that are scalable, transparent, and inclusive. In the context of present disclosure, the expressions 'land' and 'farm' can be interchangeably used throughout the description. The present disclosure provides an integrated system and method to transform agricultural insurance by addressing limitations of existing static and generalized models. Embodiment of the present disclosure provides a system and method for dynamic risk profiling using graph-based digital twin network and generative artificial intelligence for agricultural insurance. The method of the present disclosure leverages a graph-based network of digital twins to create real-time, farm-specific virtual models that continuously update with data from IoT sensors, satellite imagery, weather forecasts, and historical records. Each farm is modeled as a node in the graph-based network of digital twins, with edges representing risk propagation pathways influenced by factors such as pest migration, shared irrigation resources, and weather dependencies. These digital twins enable dynamic risk profiling by combining intrinsic farm risks with propagated risks from neighboring farms, ensuring that risk assessments reflect both local and networked influences. The method of the present disclosure further employs generative AI to simulate future risks, such as droughts or pest outbreaks, considering cascading effects across interconnected farms. This enables insurers and farmers to anticipate and mitigate potential losses proactively by tailoring interventions to both individual farms and their network context. For example, if pest migration is detected along specific propagation pathways, targeted advisories and mitigation strategies are deployed to minimize shared risks.

Insurance premiums are dynamically adjusted in real-time through a personalized premium adjustment system, which links dynamic risk profiles, inter-farm influences, and farmer compliance with advisories to financial incentives. For example, farmers who follow recommended actions, such as increasing irrigation during a drought or deploying pest control measures, are rewarded with premium discounts, encouraging proactive and sustainable farming practices. The system also collaborates with neighboring farms to reduce shared risks, such as pest migrations or resource depletion, by providing coordinated advisories and fostering network-wide resilience.

Further, in the event of a claim, the method of the present disclosure automates claims validation and fraud detection by integrating multi-source data, including satellite imagery, IoT sensor readings, and crowd-sourced inputs. This automation ensures faster, more accurate, and transparent claim settlements while minimizing fraud. By combining real-time data, predictive analytics, and interconnected farm models, the present disclosure provides a scalable, inclusive, and efficient insurance solution that benefits farmers, insurers, and policymakers alike. More specifically, the present disclosure describes the following:
1. Leveraging a graph-based network of digital twins and generative AI for solving problems of generalized and static risk assessments to create dynamic, farm-specific risk profiles that continuously adapt based on real-time data and interconnected farm relationships. Each farm is modeled as a node in a graph, where edges represent risk propagation pathways influenced by factors such as pest migration, shared resources, and weather dependencies.
2. Implementing real-time, dynamic premium recalibration for addressing inefficiencies of static premium models, based on evolving risk profiles, farmer compliance with advisories, and unforeseen risk factors. This ensures fair pricing and incentivizes proactive farming practices.
3. Resolving delays, inaccuracies, and fraud in claims validation by integrating remote sensing, IoT sensor data, and crowd-sourced inputs into an automated, multi-source verification system. This ensures objective and efficient claim settlements.

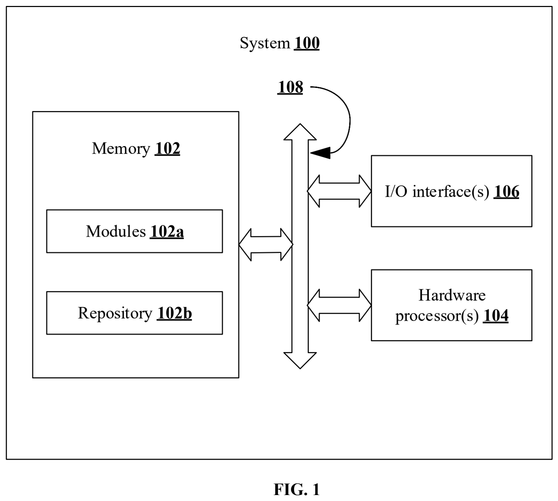

Referring now to the drawings, and more particularly to FIGS. 1 through 5, where similar reference characters denote corresponding features consistently throughout the figures, there are shown preferred embodiments, and these embodiments are described in the context of the following exemplary system and/or method.

FIG. 1 illustrates an exemplary system for dynamic risk profiling using graph-based digital twin network and generative artificial intelligence for agricultural insurance, according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism. The system 100, with one or more hardware processors present across the physically distributed components, is configured to execute functions of one or more functional blocks or components (servers) of the system 100. In an embodiment, the servers may be used to process requests and send responses, to execute an algorithm for detection, model training, and/or the like.

Referring to the components of system 100, in an embodiment, the I/O interface(s) 106 may include a variety of software and hardware interfaces, for example, a web interface, a graphical user interface, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface (s) 106 can include one or more ports for connecting to a number of external devices or to another server or devices. The external devices can include high-resolution satellites for remote sensing and vegetation indices, drones equipped with multispectral and thermal cameras for capturing detailed farm imagery, edge computing devices to process and store data locally in low-connectivity regions., external third party data sources for various types of information associated with the agriculture land, Internet of Things (IoT) sensors including soil moisture sensors for real-time water content monitoring, temperature and humidity sensors for capturing microclimatic conditions, Soil pH meters to track acidity/alkalinity, smart pest traps or pheromone traps to monitor pest activity, and the like, and farmer accessible devices such as smartphones or tablets for accessing advisories, submitting claims, and monitoring premiums.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the components of system 100 for executing different steps involved in the process of dynamic risk profiling using graph-based digital twin network and generative artificial intelligence for agricultural insurance, being performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure. The plurality of modules 110 can include various sub-modules such as framer training sub-modules (not shown) utilizing educational resources to guide farmers.

The repository 102b may include a database or a data engine. Further, the repository 102b amongst other things, may serve as a database or includes a plurality of databases for storing the data that is processed, received, or generated as a result of the execution of the plurality of modules 102a. The repository 102b may include a plurality of abstracted pieces of code for refinement and data that is processed, received, or generated as a result of the execution of the plurality of modules in the module(s) 102a. The plurality of databases may include a real-time sensor database, geospatial database, weather data repository, historical risk database, compliance and advisory database, and an insurance data repository. The real-time sensor database captures continuous streams of IoT data such as soil moisture, temperature, and pest activity. The geospatial database stores satellite and drone imagery, including vegetation indices and geotagged farm boundaries. The weather data repository maintains historical, real-time, and forecasted weather conditions from application program interfaces (APIs) or meteorological datasets. The historical risk database may include past yield records, pest/disease outbreaks, and historical claims data. The compliance and advisory database tracks advisories issued to farmers, their compliance, and resulting risk scores. The insurance data repository manages policy details, baseline premiums, dynamic adjustments, and claims history. The database stores a plurality of a plurality of data which includes satellite data, weather data, IoT sensors data, and historical records, one or more datasets, one or more models such as machine learning models and Generative Artificial intelligence (GenAI) models, and corresponding inputs and outputs of the one or more models. The memory 102 may comprise information pertaining to input(s)/output(s) of each step performed by the processor(s) 104 of the system100 and methods of the present disclosure.

Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS) any non-relational database such as NoSQL or document databases. In another embodiment, the data stored in the repository 102b may be distributed between the system 100 and the external database

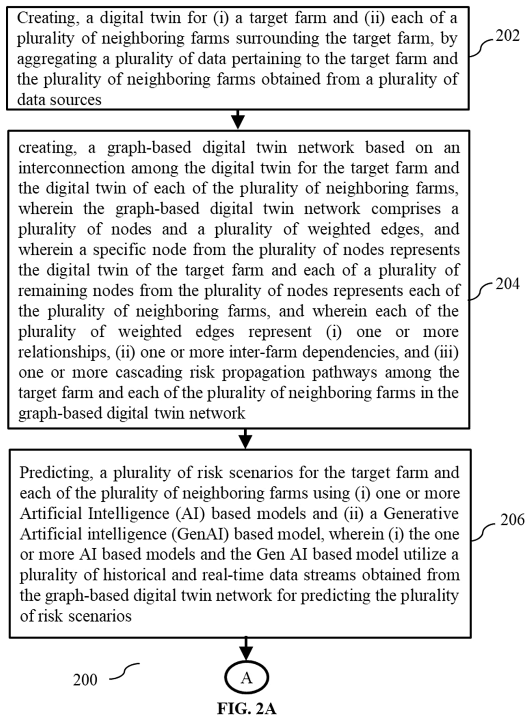

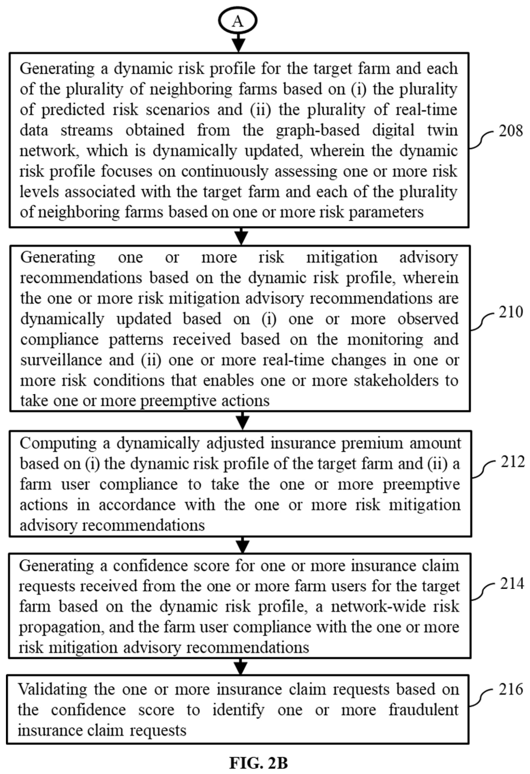

FIGS. 2A and 2B, with reference to FIG. 1, illustrate an exemplary flow diagram for dynamic risk profiling using graph-based digital twin network and generative artificial intelligence for agricultural insurance, using the system 100 of FIG. 1, in accordance with some embodiments of the present disclosure. Referring to FIG. 1, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIGS. 2A and 2B, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

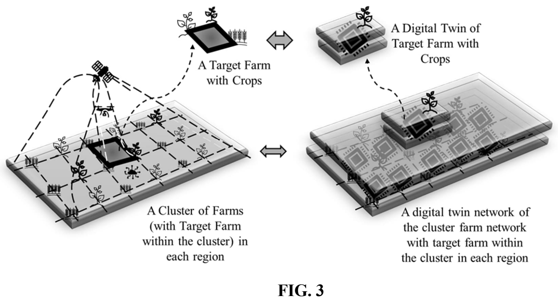

Referring to FIG. 2A, at step 202 of the present disclosure, the one or more hardware processors 104 are configured to create a digital twin for (i) a target farm and (ii) each of a plurality of neighboring farms surrounding the target farm, by aggregating a plurality of data pertaining to the target farm and the plurality of neighboring farms obtained from a plurality of data sources. The digital twin replicates physical, environmental, and operational parameters of a farm, enabling dynamic representation of its state. FIG. 3 depicts a diagram illustrating an example representation of a physical network of a farm with corresponding digital twin of farms, in accordance with some embodiments of the present disclosure. As can be seen in FIG. 3, in the cluster farm network, a target farm and its corresponding digital twin are provided. Similarly, a digital twin network of the cluster farm network with target farm within the cluster in each region is shown.

In an embodiment, the plurality of data sources may include but are not limited to aerial devices such as satellite and drones, one or more Internet of Things (IoT) sensors including soil moisture sensors for real-time water content monitoring, temperature and humidity sensors for capturing microclimatic conditions, soil pH meters, a plurality of historical records databases. The plurality of data may include but are not limited to continuous streams of IoT data such as soil moisture, temperature and pest activity, satellite and drone imagery data including vegetation indices, geographical coordinates, geotagged farm boundaries, agro-climatic zone, and crop profile, weather forecast data including historical, real-time, and forecasted weather conditions, and historical records including past yield records, pest/disease outbreaks, and historical claims data.

The one or more IoT sensors are deployed on farms for continuously measuring critical environmental parameters such as soil moisture (*Mᵢ*), temperature (*Tᵢ*), pH levels (*pHᵢ*), and pest activity (*Pₐ*). These IoT sensors transmit data to edge computing devices where preprocessing techniques such as noise filtering and outlier detection (e.g., Kalman filters) are applied. This ensures high quality by minimizing data inconsistencies and reliable data for decision-making. Satellite imagery supplements ground-level data by calculating vegetation indices such as Normalized difference vegetation index (NDVI) using spectral reflectance values from the near-infrared (NIR) and red (Red) bands as shown in equation (1) below: $NDVI = \left(NIR-RED\right) / \left(NIR+RED\right)$ (1)

This provides a broader spatial and temporal perspective on crop health.

The digital twin of a farm is represented mathematically as a multi-dimensional state vector as shown in equation (2) below: ${DTOf}_{i} \left(t\right) = f \left\{{M}_{i}, {T}_{i}, {pH}_{i},{NDVI}_{i},{P}_{a},{H}_{i},{N}_{i}\right\}$ (2)

Here, *Mᵢ, Tᵢ, pHᵢ* are real-time environmental measurements, *NDVIᵢ* represents vegetation health from satellite data, *Pₐ* represents pest activity levels, *Hᵢ* represents historical baselines, and *Nᵢ* represents influence from neighboring farms.

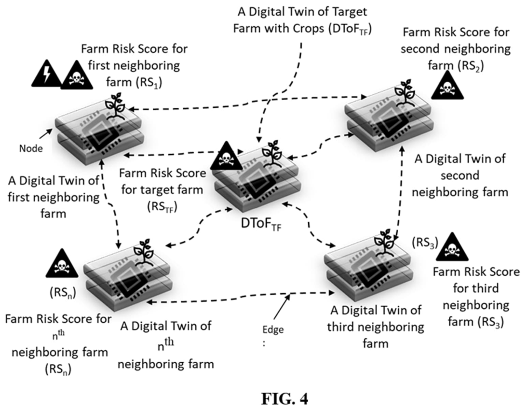

At step 204 of the present disclosure, the one or more hardware processors 104 are configured to create a graph-based digital twin network based on an interconnection among the digital twin for the target farm and the digital twin of each of the plurality of neighboring farms. The graph-based digital twin network comprises a plurality of nodes and a plurality of weighted edges. FIG. 4 depicts an exemplary diagram illustrating a sample graph-based digital twin network, in accordance with some embodiments of the present disclosure. As shown in FIG. 4, the target farm of interest is at center with the plurality of neighboring farms in the graph-based digital twin network. A specific node from the plurality of nodes represents the digital twin of the target farm and each of a plurality of remaining nodes from the plurality of nodes represents each of the plurality of neighboring farms. Each of the plurality of weighted edges represents (i) one or more relationships, (ii) one or more inter-farm dependencies, and (iii) one or more cascading risk propagation pathways among the target farm and each of the plurality of neighboring farms in the graph-based digital twin network. The one or more relationships may represent but are not limited to proximity in terms of a distance factor, historical interaction, and/or the like between the digital twin of the target farm and the plurality of neighboring farms. The one or more inter-farm dependencies may but are not limited to dependency on shared resources (e.g., irrigation networks) between the digital twin of the target farm and the plurality of neighboring farms. The one or more cascading risk propagation pathways may include but are not limited to pest migration pathways, weather impacts, disaster scenarios, and/or the like between the digital twin of the target farm and the plurality of neighboring farms.

The graph-based digital twin network connects individual digital twins as nodes in a graph structure, with edges representing shared resources (e.g., irrigation networks), pest migration pathways, and proximity. Each farm is a node in the graph-based digital twin network with attributes including Soil moisture (M), Temperature (*T*), Soil pH (*pH*), NDVI (*NDVI*), and Pest activity (*P*). Each edge is weighted (*Wᵢⱼ*) based on strength of influence between farms *i* and *j.* The weight (*Wᵢⱼ*) of an edge is calculated using factors like geographical distance (*dᵢⱼ*) between farms, shared resource utilization (*Sᵢⱼ*), and historical interaction data (*Hᵢⱼ*). The shared resource utilization may include shared irrigation dependency that quantifies how irrigation failures in neighboring farms impact the target farm. For example, if Farm A shares an irrigation channel with Farm B, then the weighted edge reflects water dependency and potential risk transmission. The pest migration pathways or pest migration likelihood provides an estimate of a probability of pests spreading from one farm to another based on proximity and the historical interaction data or past observations. In an embodiment, the weight of the weighted edge is assigned as per equation (3) shown below: ${W}_{ij} = α ⋅ {W}_{irrigation} + β ⋅ {W}_{pest} + γ ⋅ {W}_{proximity}$ (3)

Here, *W_{irrigation}* represents normalized shared irrigation dependency, *Wₚₑₛₜ* represents normalized pest migration probability, *W_{proximity}* represents inverse of distance between farms, and *α, β*, *γ* represent scaling factors based on a relative importance of each factor.

In an embodiment, real-time updates in one farm's conditions dynamically propagate through this graph-based digital twin network, influencing neighboring farms' states. This dynamic nature of the digital twins ensures continuous updates. Real-time changes in one farm's conditions propagate through the network, influencing neighboring farms. For example, if Farm X reports increased pest activity *(Pₐ),* the system 100 of the present disclosure uses a graph-based propagation algorithm to estimate a likelihood of pest migration to the target farm A from that Farm X based on edge weights and environmental conditions like wind speed and direction. This enables the graph-based digital twin network to capture cascading effects and simulate collective risk exposure across connected farms.

Further, at step 206 of the present disclosure, the one or more hardware processors 104 are configured to predict a plurality of risk scenarios for the target farm and each of the plurality of neighboring farms using (i) one or more Artificial Intelligence (AI) based models and (ii) a generative artificial intelligence (GenAI) based model. The one or more artificial intelligence (AI) based models and the GenAI based model utilize a plurality of historical and real-time data streams obtained from the graph-based digital twin network for predicting the plurality of risk scenarios. In an embodiment, the one or more AI based models may include but are not limited to Time-series forecasting models such as Long Short-Term Memory (LSTM) networks, graph neural networks (GNN), and/or the like.

The system of the present disclosure uses the GenAI based model to simulate potential future risk scenarios, such as droughts, pest outbreaks, or resource conflicts. These predictions are enriched by considering graph propagation effects, where risks from neighboring farms influence the target farm's profile through interconnected pathways. The one or more AI based models analyze historical patterns, current environmental data, and inter-farm connections to generate probabilistic scenarios. For instance, if weather forecasts predict low rainfall and pest activity increases on a neighboring farm, the system 100 of the present disclosure anticipates a higher likelihood of drought stress or pest migration for the target farm. In an embodiment, simulation of the GenAI based model relies on diverse data streams aggregated from the digital twins of the target farm and each of the plurality of neighboring farms, and the graph-based digital twin network. Input variables provided to the GenAI based model includes (i) real-time data including soil moisture (*Mₜ*), *NDVI* (*NDVIₜ*), and pest activity (*Pₐ*) from the one or more IoT sensors and satellite imagery, (ii) historical data including past yields, pest outbreaks, and seasonal trends for each farm, (iii) graph network dependencies in terms of weighted relationships (*Wᵢⱼ*) between the target farm and the plurality of neighboring farms capturing the one or more cascading risk propagation pathways such as pest migration or shared water usage, and (iv) external variables including regional/global factors such as market trends, climate projections, and extreme weather events. The simulation workflow includes risk scenario generation and Monte Carlo simulations. For risk scenario generation, the GenAI based model perturbs input variables to simulate environmental, operational, and economic risk changes. For example, if *Mₜ* is low and weather forecasts indicate limited rainfall, the GenAI based model predicts drought progression over 30 days. For Monte Carlo simulations, stochastic iterations model uncertainty, a range of potential outcomes is generated. Examples of a few predicted risk scenarios include the following:
1. Scenario 1: 80% probability of drought worsening over the next 15 days, leading to a 20% NDVI drop (△ *NDVI =* -0.2 ).
2. Scenario 2: 60% probability of pest migration from B and C to A within 10 days.
3. Scenario 3: 40% probability of soil salinity issues due to prolonged irrigation deficits (*pH_{A}* ≤ 6.5).

The GNNs model cascading effects across the graph-based digital twin network. For example, a pest outbreak in Farm B and C influences the network risk parameters (*R_{network}*) of Farms A based on edge weights (*W_{AB}, W_{AC}*). A simulated risk score for the plurality of predicted risk scenarios of Farm A is computed as shown in equation (4) below: ${R}_{simulated , A} = {\sum }_{{iP}_{scenario , i}} {R}_{scenario , i}$ (4)

Here, *R_{simulated,A}* represents simulated risk score for a target farm A computed as an aggregate risk score from multiple possible scenarios, *R_{scenario,i}* represents a risk score associated with i^{th} simulated scenario (e.g. drought, pest outbreak or irrigation failure), and *P_{scenario,i}* represents a probability of occurrence of i^{th} scenario.

At step 208 of the present disclosure, the one or more hardware processors 104 are configured to generate a dynamic risk profile for the target farm and each of the plurality of neighboring farms based on (i) the plurality of predicted risk scenarios and (ii) the plurality of real-time data streams obtained from the graph-based digital twin network, which is dynamically updated. The dynamic risk profile focuses on continuously assessing one or more risk levels associated with the target farm and each of the plurality of neighboring farms based on one or more risk parameters. The one or more risk parameters may include but are not limited to environmental risk parameters, operational risk parameters, economic risk parameters, and network risk parameters.

The dynamic risk profile focuses on continuously assessing the one or more risk levels for each farm based on its environmental, operational, and network influences. This step combines individual farm parameters with cascading risks from neighboring farms, offering a holistic risk assessment. The process begins with real-time data streams from the digital twin of the target farm and the plurality of neighboring farms. The environmental risk (*Rₑₙᵥ*) is calculated using data such as soil moisture, temperature, and NDVI. For instance, a soil moisture value below 20% or an NDVI drop below 0.4 signals environmental stress. The operational risk (*Rₒₚₛ*) is derived from pest activity levels (*Pₐ*) and pH imbalances, using thresholds to classify critical situations. The economic risk (*R_{econ}*) is modeled using external factors like wheat prices and supply-demand dynamics. The system of the present disclosure then incorporates the network risk (*R_{network}*), calculated based on graph propagation models (i.e., GNNs). For example, if Farm B and Farm C exhibit high pest activity, their risk propagates to Farm A through weighted edges (*W_{AB}* and *W_{AC}*). These contributions are aggregated into a dynamic risk score (*R_{dynamic}*). The dynamic risk profile for each farm is segmented into four main components:
1. Environmental Risk (*Rₑₙᵥ*): This component captures environmental factors such as droughts, floods, and extreme temperatures, calculated using real-time weather data, satellite-derived NDVI, and historical environmental records. The environmental risk is computed as shown in equation (5) below: ${R}_{env} = f \left({NDVI}_{t}, {P}_{precipitation}, {T}_{t}\right)$ (5)
2. Operational Risk (*Rₒₚₛ*): This measures operational challenges like pest activity, irrigation gaps, and suboptimal soil conditions and computed as shown in equation (6) below: ${R}_{ops} = g \left({P}_{a}, {M}_{t}, {pH}_{t}\right)$ (6) Here, *Pₐ* represents pest activity, *Mₜ* represents soil moisture, and *pHt* represents pH levels.
3. Economic Risk (*R_{econ}*): This evaluates market-related risks such as price volatility and production costs, normalized against the target farm's expected yield.
4. Network Risk (*R_{network}*): This captures cascading risks arising from interconnected farms, modeled as shown in equation (7) below: ${R}_{network} \left(t\right) = {\sum }_{j ∈ {N}_{i}} {w}_{ij} {R}_{dynamic , j} \left(t\right)$ (7)

Here, *Wᵢⱼ* represents weight of influence from farm *j* to farm *i,* considering distance, shared resources, and historical dependencies.

Thus, the dynamic risk score for a farm *i* is computed as shown in equation (8) below: ${R}_{dynamic , i} \left(t\right) = {w}_{1} {R}_{env , i} \left(t\right) + {w}_{2} {R}_{ops , i} \left(t\right) + {w}_{3} {R}_{econ , i} \left(t\right) + {γR}_{network , i} \left(t\right)$ (8)

The system dynamically updates risk profiles by propagating risks across the graph-based digital twin network. For example, if Farm B and C report increased pest activity (*Pₐ*), its network risk component (*R_{network,A}*) influences target farm A based on the weighted edges *W_{AB}* and *W_{AC}.* The GNN refines risk propagation iteratively using equation (9) below: ${h}_{i}^{\left(k+1\right)} = σ \left({\sum }_{j ∈ {N}_{i}} {w}_{ij} {h}_{j}^{\left(k\right)} + {h}_{i}^{\left(k\right)}\right)$ (9)

Here, ${h}_{i}^{\left(k\right)}$ represents a hidden state of farm *i* at iteration *k* and σ represents an activation function (e.g., Rectified Linear Unit (ReLU)).

Considering an example, where Farm A is a target farm and Farms B and C are neighboring farms, input data for the target Farm A includes soil moisture *(Mt* = 15, below threshold of 20%), Pest activity (*Pₐ* = 7/10 traps triggered), and NDVI (*NDVIₜ* = 0.5, indicating moderate stress). The weights assigned to edges connecting to the neighboring farms are *W_{AB} =* 0.7, *W_{AC}* = 0.6 and risk component scores are *R_{env,A}* = 0.8, *R_{ops,A}* = 0.9, *R_{dynamic,A} =* 0.2, and *R_{network,A}* = 0.7. Then the dynamic risk score for the target Farm A is computed as: ${R}_{dynamic , A} \left(t\right) = 0.5 \times 0.8 + 0.3 \times 0.9 + 0.2 \times 0.4 + 0.1 \times 0.7 = 0.7$

Using the graph structure, the plurality of predicted risk scenarios dynamically adjusts the dynamic risk profile of the target farm by integrating contributions from the graph-based digital twin network. This ensures that the farm risks are no longer generalized across regions but instead tailored to each farm's unique environment, enhancing accuracy in risk assessment. The simulated risk score for the plurality of predicted risk scenarios is integrated into each farm's dynamic risk profile and a final risk score is computed as shown in equation (10) below ${R}_{final , i} \left(t\right) = {αR}_{dynamic , i} \left(t\right) + {βR}_{simulated , i} \left(t\right)$ (10)

The final risk score combines the plurality of predicted risk scenarios with the dynamic risk profile to account for both current and anticipated risks.

At step 210 of the present disclosure, the one or more hardware processors 104 are configured to generate one or more risk mitigation advisory recommendations based on the dynamic risk profile. The final risk score enables the system 100 of the present disclosure to preemptively generate one or more risk mitigation advisory recommendations. The one or more risk mitigation advisory recommendations leverage the graph-based digital twin network, The plurality of simulated risk scenarios, and a compliance tracking to provide actionable recommendations that prevent risk escalation. The system of the present disclosure integrates real-time data from IoT sensors, satellite imagery, and graph-based risk propagation models to monitor farm-specific and network-wide conditions. The one or more risk mitigation advisory recommendations are specific, actionable, and time-sensitive, addressing identified risks. Through advanced computational models, the one or more risk mitigation advisory recommendations are formulated to address current risks while preemptively mitigating cascading threats from neighboring farms. Based on identified risks, the system of the present disclosure dynamically formulates the one or more risk mitigation advisory recommendations using a combination of rule-based models, machine learning models, historical patterns, and graph neural networks (GNNs). The machine learning models predict the effectiveness of various mitigation actions based on historical data and current conditions. The rule-based models use thresholds to trigger advisories. For example, if Farm A's soil moisture drops below a critical threshold (*Mᵢ* < 20), the system of the present disclosure recommends increasing irrigation by 20% to stabilize moisture levels. In parallel, if pest migration from Farm B is detected with a high influence weight (*W_{AB}* > 0.7), the system of the present disclosure generates a collaborative risk mitigation advisory recommendation for Farm A to apply pesticides and for Farm B to set traps along shared boundaries. These risk mitigation advisory recommendations are prioritized based on urgency and severity, determined through the final risk scoring and temporal escalation analysis. The one or more risk mitigation advisory recommendations are communicated to the farmers through mobile applications, Short Messaging Service (SMS) notifications, and IoT-enabled devices. Each risk mitigation advisory recommendation includes clear, actionable steps tailored to a specific farm's conditions. For example, a mobile notification might instruct a farmer to "Apply 15 liters of pesticide X within 48 hours to control pest activity," while an IoT-enabled irrigation system can autonomously execute recommended water adjustments. These actions are monitored in real-time, with IoT sensors and satellite imagery validating compliance. For instance, soil moisture sensors can confirm an increase in moisture levels post-irrigation, while NDVI trends verify improvements in vegetation health after pesticide application. In an embodiment, each risk mitigation advisory recommendation is assigned a priority level based on severity of the risk and the urgency of required actions as follows:
1. High Priority: Actions needed within 24 hours (e.g., pesticide application to control pests).
2. Medium Priority: Actions needed within 2-3 days (e.g., irrigation adjustments).
3. Low Priority: Preventive measures (e.g., fertilizer applications).

For Example, pest control risk mitigation advisory recommendations are marked as high priority, while irrigation adjustments may be assigned medium priority.

Risk propagation from the plurality of neighboring farms influences the target farm's risk mitigation advisory recommendation generation. The system of the present disclosure uses graph-based models to calculate cascading risks and issues collaborative risk mitigation advisory recommendation for interconnected farms. Graph Neural Networks (GNNs) identify propagation routes and quantify risk contributions from neighboring farms. Edge weights (*Wᵢⱼ*) represent the influence of neighboring farms *j* on the target farm *i,* factoring in proximity, shared resources, and historical interdependencies. For example, if Farm A's pest outbreak (*Pₐ > Pthreshold*) propagates to Farm B (*W_{AB} >* 0.7), then the risk mitigation advisory recommendation for Farm B is "Set traps along the eastern boundary to prevent pest migration from Farm A."

In an embodiment, an effectiveness of the one or more risk mitigation advisory recommendations is continuously evaluated by comparing (i) one or more pre-risk mitigation advisory recommendation conditions and (ii) one or more post-risk mitigation advisory recommendation conditions, using a feedback loop mechanism. The feedback loop mechanism utilizes (i) one or more Reinforcement Learning (RL) models and (ii) one or more evaluation metrics to evaluate the effectiveness of the one or more risk mitigation advisory recommendations. The system 100 of the present disclosure employs the feedback loop mechanism to evaluate effectiveness of the one or more risk mitigation advisory recommendations by comparing pre- and post-risk mitigation advisory recommendations conditions. For example, if pest activity (*Pₐ*) decreases by 'x%' (e.g., 50%) following pesticide application, then the risk mitigation advisory recommendation is marked as successful. This data is fed into the one or more RL models to refine future recommendations, prioritizing successful actions (e.g., timely irrigation by Farm A reducing drought severity) and penalizing ineffective ones. The one or more RL models learn from the success or failure of past risk mitigation advisory recommendations to optimize future recommendations. The one or more evaluation metrics determine a reduction in pest activity (△ *Pₐ*) or increase in NDVI (△ *NDVI* ).

The one or more risk mitigation advisory recommendations are dynamically updated based on (i) one or more observed compliance patterns received based on the monitoring and surveillance and (ii) one or more real-time changes in one or more risk conditions that enable one or more stakeholders to take one or more preemptive actions. The one or more preemptive actions may include adjusting irrigation schedules or coordinating pest control measures across farms for a rainfall or pest activity event based higher likelihood of drought stress or pest migration.

Referring to FIG. 2B, at step 212 of the present disclosure, the one or more hardware processors 104 are configured to compute a dynamically adjusted insurance premium amount based on (i) the dynamic risk profile of the target farm and (ii) a farm user compliance to take the one or more preemptive actions in accordance with the one or more risk mitigation advisory recommendations. The farm user compliance to take the one or more preemptive actions is continuously monitored using at least one of one or more sensors, one or more image acquisition devices, and one or more mobile applications. The one or more sensors may include but are not limited to IoT sensors. The one or more image acquisition devices may include but are not limited to satellites, drones, and/or the like. IoT sensors and satellite imagery validate implementation of the one or more risk mitigation advisory recommendations by providing real-time feedback on whether prescribed actions have been executed. Soil moisture sensors validate increase in irrigation post- risk mitigation advisory recommendation. NDVI monitoring confirms vegetation health improvements after pesticide application. For example, the one or more sensors confirm that soil moisture increased to 25% after irrigation adjustments. Satellite imagery shows a 10% increase in NDVI following pest control measures. The dynamically adjusted insurance premium amount utilizes one or more real-time network influence effects for dynamically adjusting the dynamic risk profile of the target farm based on each of the plurality of weighted edges.

The farm user compliance with the one or more risk mitigation advisory recommendations impacts the insurance premium amount adjustments, incentivizing farmers to adopt proactive risk mitigation. This means that farmers who comply with the one or more risk mitigation advisory recommendations are rewarded with premium discounts, incentivizing proactive behavior and collaborative risk management. Rewards are calculated as discounts based on compliance rates and an effectiveness of the one or more preemptive actions. Discounts are applied directly to insurance premium amounts via automated systems. For instance, if Farm A complies with pest control risk mitigation advisory recommendations, it receives a 10% discount on its insurance premium amount, fostering trust and engagement. Network-wide compliance patterns are tracked through graph-based propagation models, ensuring that cascading risks are minimized. For example, if Farm B follows the one or more risk mitigation advisory recommendations to prevent pest migration from Farm A, the graph based digital twin network experiences reduced risk levels. This collaborative effort not only benefits individual farms but also stabilizes premiums across the farms in the graph based digital twin network.

The step 212 is better understood by way of the following exemplary explanation.

Dynamic premium adjustment introduces a responsive and real-time mechanism for recalibrating insurance premiums based on the dynamic risk profiles, compliance with the one or more risk mitigation advisory recommendations, and network-wide influences. This step reflects how interconnected farms influence the target farm's premium through the graph-based risk propagation model. Unlike traditional static premium models, the method of the present disclosure dynamically adjusts the insurance premium amounts throughout the policy term by accounting for evolving risk factors and cascading risks within a network of digital twins. The step of dynamically adjusting insurance premium amount begins with initializing, the target farm's baseline risk profile generated based on the initial conditions and calculating, a baseline premium based on the target farm's baseline risk profile at the start of the policy term. This step leverages historical data and statistical normalization methods to calculate the baseline premium (i.e., a fair starting premium). Data pipelines aggregate real-time sensor data, preprocessing it to eliminate anomalies using techniques like Kalman filtering. The method uses machine learning models (e.g., Gradient Boosting Trees) to predict an initial risk score. The baseline premium (*P_{baseline}*) establishes a starting point for the target farm's insurance premium. It reflects the initial risk score (*Rᵢₙᵢₜᵢₐₗ*) of the target farm, determined during an initialization phase based on environmental, operational, economic, and network-based risks. The baseline premium is normalized against regional minimum (*Rₘᵢₙ*) and maximum (*Rₘₐₓ*) risk thresholds to ensure consistency across diverse farming conditions. The baseline premium is calculated as shown in equation (11) below: ${P}_{baseline} = {P}_{max} ⋅ \frac{{R}_{initial} - {R}_{min}}{{R}_{max} - {R}_{min}}$ (11)

Here, *Rᵢₙᵢₜᵢₐₗ* represents the initial risk score of the target farm, derived from IoT sensors, satellite data, and historical records.

For example, for a farm with *Rᵢₙᵢₜᵢₐₗ* = 0.6, *Rₘᵢₙ* = 0.3, *Rₘₐₓ* = 1.0, and *Pₘₐₓ* = 500, the baseline premium is: ${P}_{baseline} = 500 ⋅ \frac{0.6 - 0.3}{1.0 - 0.3} = 214.29$

Further, as conditions evolve, the premium amount recalibrates dynamically based on the dynamic risk profile of the target farm. The dynamic risk adjustment ensures that the premium amount reflects real-time changes in environmental factors (e.g., drought intensity, pest activity) and operational measures. As risk factors evolve during the policy term, the premium recalibrates using the target farm's current dynamic risk score (*R_{dynamic}*) relative to its initial risk score. The dynamically adjusted insurance premium amount and the dynamic risk adjustment are calculated as shown in equation (12) and (13) respectively: ${P}_{dynamic} = {P}_{baseline} ⋅ \left(1+ΔR\right)$ (12) $Δ R = \frac{{R}_{dynamic} - {R}_{initial}}{{R}_{max}}$ (13)

Here, *R_{dynamic}* represents current risk score of the target farm.

This step integrates predictive analytics and temporal modeling. Advanced generative AI models simulate evolving risks (e.g., worsening drought) to predict *R_{dynamic}.* These simulations incorporate factors such as vegetation indices (e.g., NDVI), soil moisture, and pest activity. Automated pipelines ingest data, process it in edge devices, and update risk scores in the digital twin framework. For example, if the target farm's risk increases to *R_{dynamic}* = 0.8, then the dynamic risk adjustment is as follows: ${P}_{dynamic} = 214.29 ⋅ \left(1+\frac{0.8 - 0.6}{0.6}\right) = 285.71$

To incentivize proactive risk mitigation, the system 100 applies a compliance discount based on the farm's adherence to the one or more risk mitigation advisory recommendations. Farmers earn discounts by following recommendations (e.g., improving irrigation or applying pesticides). The compliance-adjusted premium is calculated as shown in equation (14) below: ${P}_{compliance} = {P}_{dynamic} ⋅ \left(1-d\right)$ (14)

Here, d represents compliance rate, determined as a ratio of implemented risk mitigation advisory recommendations to total risk mitigation advisory recommendations issued.

In an embodiment, IoT sensors and satellite imagery also validate compliance like soil moisture sensors confirm increased irrigation, and NDVI improvements indicate vegetation recovery after pesticide application. Machine learning models (e.g., Reinforcement Learning) evaluate compliance effectiveness and assign discount rates. For example, for a compliance rate of *d* = 0.15, *P_{compliance}* = 285.71 · (1 - 0.15) = 242.86. Further, cascading risks from neighboring farms are incorporated into the premium to reflect interconnected dependencies within the network. Graph Neural Networks (GNNs) calculate cascading effects. These models use edge weights (*Wᵢⱼ*) derived from normalized metrics like distance (*dᵢⱼ*), shared resource factors (*Sᵢⱼ*), and historical influence (*Hᵢⱼ*). The graph-based approach ensures that high-risk neighboring farms (e.g., those with severe pest outbreaks) contribute proportionately to the target farm's premium. Using a graph-based model, the contribution of neighboring farms (*j*) to the target farm (i) is calculated as shown in equation (15) below: ${P}_{network} = γ ⋅ {\sum }_{j ∈ N} {w}_{ij} {R}_{dynamic , j}$ (15)

*Wᵢⱼ* represents influence weight between farms *i* and *j,* derived from factors like shared resources, proximity, and historical risk patterns, *R_{dynamic,j}* represents the current dynamic risk score of neighboring farms, and *γ* represents a scaling parameter. The final dynamically adjusted insurance premium (*P_{final}*) amount aggregates all components, ensuring that it reflects the target farm's current risk profile, compliance efforts, and network dependencies. The final dynamically adjusted insurance premium amount is computed as shown in equation (16) below: ${P}_{final} = {P}_{compliance} + {P}_{network}$ (16)

For example, if neighboring farm B has *R_{dynamic, B}* = 0.7, and W_{AB} = 0.8, then *P_{network}* = 0.1 · 0.8 · 0.7 = 5.60 and *P_{final}* = 242.86 + 5.60 = 248.46.

At step 214 of the present disclosure, the one or more hardware processors 104 are configured to generate a confidence score for one or more insurance claim requests received from the one or more farm users for the target farm based on the dynamic risk profile, a network-wide risk propagation, and the farm user compliance with the one or more risk mitigation advisory recommendations. Further, at step 216 of the present disclosure, the one or more hardware processors 104 are configured to validate the one or more insurance claim requests based on the confidence score to identify one or more fraudulent insurance claim requests.

The steps 212 and 214 are better understood by way of the following exemplary explanation.

When an insurance claim requests is received from a farmer for crop damage, a multi-source data including satellite imagery, IoT sensor readings, and farmer-submitted reports are integrated. The system 100 of the present disclosure cross-references pre- and post-event satellite imagery such as a drop in NDVI values, to detect changes in crop health. Further, IoT sensors provide ground-level data such as soil moisture levels during a drought or temperature fluctuations during frost damage. Additionally, crowd-sourced inputs from neighboring farms are received to validate a regional context, ensuring that reported damages are consistent with surrounding conditions. This means that claims validation approach employs an integrated framework of real-time IoT sensors, satellite imagery, predictive models, and graph-based risk propagation analysis to validate claims efficiently and transparently. The process begins with data collection from IoT sensors measuring soil moisture, temperature, and pest activity, as well as satellite imagery capturing pre- and post-event vegetation indices such as NDVI. These data points, combined with historical records and digital twin predictions, form a comprehensive dataset for assessing the validity of claims. For damage assessment, the system calculates key parameters such as changes in soil moisture (△ *M* ), vegetation health (△ *NDVI),* and pest activity (△ *P* ) as shown in equation (17), (18) and (19) respectively: $Δ NDVI = {NDVI}_{post} - {NDVI}_{pre}$ (17) $Δ M = {M}_{post} - {M}_{pre}$ (18) $Δ P = {P}_{post} - {P}_{pre}$ (19)

For example, a decrease in NDVI from 0.65 to 0.35 and soil moisture from 30% to 10% signals significant drought stress. These observed changes are cross validated against generative AI models, which predict potential outcomes based on historical trends and real-time inputs. If the observed outcomes align with predictions, the claim is deemed valid. For instance, if the AI predicts a 70% likelihood of drought leading to a 30% drop in NDVI, and the observed NDVI drop is consistent, the claim is supported. The system also integrates a network context by analyzing cascading risk patterns from interconnected farms. Graph Neural Networks (GNNs) are used to propagate risk from neighboring farms (e.g., Farms B and C) to assess whether shared conditions corroborate or contradict the claim. If Farm A reports pest damage but Farms B and C show no related activity, the claim is flagged for further investigation.

To detect inconsistencies and flag fraudulent claims, advanced algorithms are employed. For instance, if a farmer reports flood damage but neighboring farms do not show similar conditions, the claim request is flagged for further review. Similarly, anomalies in IoT sensor data, such as inconsistent soil moisture levels, raise red flags. Generative AI models are used to model an expected damage patterns based on an event's severity and compare them with submitted claim request. Machine learning algorithms detect anomalies by identifying deviations in claim data compared to historical patterns and network behavior. Claim requests with high confidence scores are approved automatically with compensation disbursed digitally, while suspicious claim requests are escalated for manual inspection, supported by detailed logs of observed data, predicted outcomes, and network analysis. The method of the present disclosure ensures that genuine claim requests are processed quickly while financial losses due to fraud is prevented. This automated process significantly reduces manual intervention, accelerating claim approvals, minimizing errors and fraudulent claims, ensures fair compensation, and leverages the graph based digital twin network (i.e., an interconnected network) to enhance accuracy and trust. As an example, if Farm A submits a claim request for drought damage reporting a 50% yield loss, data analysis is performed as: $Prev - event : {M}_{pre} = 30 , {NDVI}_{pre} = 0.6$ $Post - event : {M}_{post} = 10 , {NDVI}_{post} = 0.3$ $Calculations : Δ M = - 20 and Δ NDVI = - 0.3$

For accounting network context, Farms B and C report similar NDVI reductions supporting Farm A's drought claim request. Thus, the claim request is approved automatically based on strong alignment between observed data, predictions, and network insights.

In an embodiment, the feedback loop mechanism and continuous learning mechanism dynamically adapts the system of the present disclosure by integrating real-time data, historical insights, and network-wide feedback from compliance tracking, claims validation, and the one or more risk mitigation advisory recommendations outcomes. This iterative process uses graph-based risk propagation from interconnected digital twins to refine models, recalibrate algorithms, and improve decision-making over time. The system of the present disclosure collects data from various sources, including IoT sensors that monitor compliance with the one or more risk mitigation advisory recommendations (e.g., soil moisture increase after irrigation) and satellite imagery that validates vegetation health improvements. Claims validation results provide ground-truth datasets to assess accuracy of generative AI predictions, enabling iterative refinements. For example, if a risk mitigation advisory recommendation to maintain soil moisture above 25% results in stable NDVI values, the risk mitigation advisory recommendation 's success rate is used to fine-tune future recommendations.

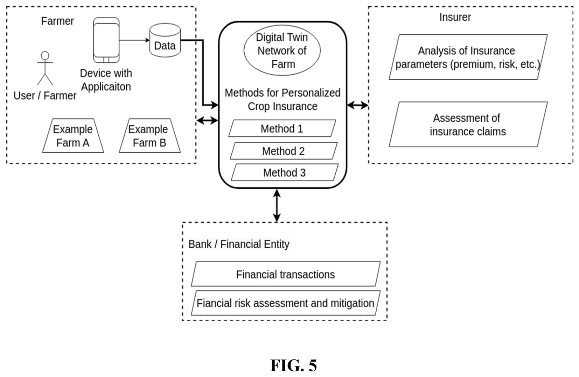

Performance evaluation is conducted by comparing predicted and observed outcomes. If discrepancies are detected, Reinforcement Learning algorithms are employed to adjust the one or more risk mitigation advisory recommendations generation strategies. Ineffective risk mitigation advisory recommendations ae penalized while rewarding successful ones, improving future recommendations. Additionally, anomaly detection models identify outliers, such as unexpected compliance failures or fraudulent claims, which are flagged for further analysis. Risk profiling models and premium adjustment algorithms are dynamically updated using cascading network effects from neighboring farms. For instance, if Farms B and C influence Farm A's risk score due to shared drought conditions, this feedback is integrated to recalibrate weights in the risk profiling models. Graph Neural Networks (GNNs) enable the system of the present disclosure to account for these interdependencies, ensuring collaborative risk management. The system of the present disclosure also provides actionable insights for stakeholders. FIG. 5 depicts a diagram illustrating an interaction of various stakeholders through the graph-based digital twin network of farms, in accordance with some embodiments of the present disclosure. As shown in FIG. 5, insurers benefit from enhanced risk assessments and more precise premium adjustments, while farmers receive tailored risk mitigation advisory recommendations that incorporate local and network-wide conditions. Feedback is visualized on a centralized dashboard, offering transparency and enabling informed decision-making across the graph based digital twin network. This continuous learning approach ensures that the system of the present disclosure evolves dynamically, becoming more accurate and adaptive over time.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising:
creating (202), via one or more processors, a digital twin for (i) a target farm and (ii) each of a plurality of neighboring farms surrounding the target farm, by aggregating a plurality of data pertaining to the target farm and the plurality of neighboring farms obtained from a plurality of data sources;
creating (204), via the one or more processors, a graph-based digital twin network based on an interconnection among the digital twin for the target farm and the digital twin of each of the plurality of neighboring farms, wherein the graph-based digital twin network comprises a plurality of nodes and a plurality of weighted edges, and wherein a specific node from the plurality of nodes represents the digital twin of the target farm and each of a plurality of remaining nodes from the plurality of nodes represents each of the plurality of neighboring farms, and wherein each of the plurality of weighted edges represent (i) one or more relationships, (ii) one or more inter-farm dependencies, and (iii) one or more cascading risk propagation pathways among the target farm and each of the plurality of neighboring farms in the graph-based digital twin network;
predicting (206), via the one or more processors, a plurality of risk scenarios for the target farm and each of the plurality of neighboring farms using (i) one or more Artificial Intelligence (AI) based models and (ii) a Generative Artificial Intelligence (GenAI) based model, wherein (i) the one or more AI based models and the GenAI based model utilize a plurality of historical and real-time data streams obtained from the graph-based digital twin network for predicting the plurality of risk scenarios;
generating (208), via the one or more processors, a dynamic risk profile for the target farm and each of the plurality of neighboring farms based on (i) the plurality of predicted risk scenarios and (ii) the plurality of real-time data streams obtained from the graph-based digital twin network, which is dynamically updated, wherein the dynamic risk profile focuses on continuously assessing one or more risk levels associated with the target farm and each of the plurality of neighboring farms based on one or more risk parameters;
generating (210), via the one or more processors, one or more risk mitigation advisory recommendations based on the dynamic risk profile, wherein the one or more risk mitigation advisory recommendations are dynamically updated based on (i) one or more observed compliance patterns received based on the monitoring and surveillance and (ii) one or more real-time changes in one or more risk conditions that enable one or more stakeholders to take one or more preemptive actions;
computing (212), via the one or more processors, a dynamically adjusted insurance premium amount based on (i) the dynamic risk profile of the target farm and (ii) a farm user compliance to take the one or more preemptive actions in accordance with the one or more risk mitigation advisory recommendations;
generating (214), via the one or more processors, a confidence score for one or more insurance claim requests received from the one or more farm users for the target farm based on the dynamic risk profile, a network-wide risk propagation, and the farm user compliance with the one or more risk mitigation advisory recommendations; and
validating (216), via the one or more processors, the one or more insurance claim requests based on the confidence score to identify one or more fraudulent insurance claim requests.

2. The processor implemented method as claimed in claim 1, an effectiveness of the one or more risk mitigation advisory recommendations is continuously evaluated by comparing (i) one or more pre-risk mitigation advisory recommendation conditions and (ii) one or more post-risk mitigation advisory recommendation conditions, using a feedback loop mechanism.

3. The processor implemented method as claimed in claim 2, wherein the feedback loop mechanism utilizes (i) one or more Reinforcement Learning (RL) models and (ii) one or more evaluation metrics to evaluate the effectiveness of the one or more risk mitigation advisory recommendations.

4. The processor implemented method as claimed in claim 1, wherein the dynamically adjusted insurance premium amount utilizes one or more real-time network influence effects for dynamically adjusting the dynamic risk profile of the target farm based on each of the plurality of weighted edges.

5. The processor implemented method as claimed in claim 1, wherein the farm user compliance to take the one or more preemptive actions is continuously monitored using at least one of one or more sensors, one or more image acquisition devices, and one or more mobile applications.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
create a digital twin for (i) a target farm and (ii) each of a plurality of neighboring farms surrounding the target farm, by aggregating a plurality of data pertaining to the target farm and the plurality of neighboring farms obtained from a plurality of data sources;
create a graph-based digital twin network based on an interconnection among the digital twin for the target farm and the digital twin of each of the plurality of neighboring farms, wherein the graph-based digital twin network comprises a plurality of nodes and a plurality of weighted edges, and wherein a specific node from the plurality of nodes represents the digital twin of the target farm and each of a plurality of remaining nodes from the plurality of nodes represents each of the plurality of neighboring farms, and wherein each of the plurality of weighted edges represent (i) one or more relationships, (ii) one or more inter-farm dependencies, and (iii) one or more cascading risk propagation pathways among the target farm and each of the plurality of neighboring farms in the graph-based digital twin network;
predict a plurality of risk scenarios for the target farm and each of the plurality of neighboring farms using (i) one or more Artificial Intelligence (AI) based models and (ii) a Generative Artificial Intelligence (GenAI) based model, wherein (i) the one or more Artificial Intelligence based models and the GenAI based model utilize a plurality of historical and real-time data streams obtained from the graph-based digital twin network for predicting the plurality of risk scenarios;
generate a dynamic risk profile for the target farm and each of the plurality of neighboring farms based on (i) the plurality of predicted risk scenarios and (ii) the plurality of real-time data streams obtained from the graph-based digital twin network, which is dynamically updated, wherein the dynamic risk profile focuses on continuously assessing one or more risk levels associated with the target farm and each of the plurality of neighboring farms based on one or more risk parameters;
generate one or more risk mitigation advisory recommendations based on the dynamic risk profile, wherein the one or more risk mitigation advisory recommendations are dynamically updated based on (i) one or more observed compliance patterns received based on the monitoring and surveillance and (ii) one or more real-time changes in one or more risk conditions that enables one or more stakeholders to take one or more preemptive actions;
compute a dynamically adjusted insurance premium amount based on (i) the dynamic risk profile of the target farm and (ii) a farm user compliance to take the one or more preemptive actions in accordance with the one or more risk mitigation advisory recommendations;
generate a confidence score for one or more insurance claim requests received from the one or more farm users for the target farm based on the dynamic risk profile, a network-wide risk propagation, and the farm user compliance with the one or more risk mitigation advisory recommendations; and
validate the one or more insurance claim requests based on the confidence score to identify one or more fraudulent insurance claim requests.

7. The system as claimed in claim 6, wherein an effectiveness of the one or more risk mitigation advisory recommendations is continuously evaluated by comparing (i) one or more pre-risk mitigation advisory recommendation conditions and (ii) one or more post-risk mitigation advisory recommendation conditions, using a feedback loop mechanism.

8. The system as claimed in claim 7, wherein the feedback loop mechanism utilizes (i) one or more Reinforcement Learning (RL) models and (ii) one or more evaluation metrics to evaluate the effectiveness of the one or more risk mitigation advisory recommendations.

9. The system as claimed in claim 6, wherein the dynamically adjusted insurance premium amount utilizes one or more real-time network influence effects for dynamically adjusting the dynamic risk profile of the target farm based on each of the plurality of weighted edges.

10. The system as claimed in claim 6, wherein the farm user compliance to take the one or more preemptive actions is continuously monitored using at least one of one or more sensors, one or more image acquisition devices, and one or more mobile applications.

11. One or more non-transitory machine-readable information storage mediums comprising one or more instructions which when executed by one or more hardware processors cause:
creating a digital twin for (i) a target farm and (ii) each of a plurality of neighboring farms surrounding the target farm, by aggregating a plurality of data pertaining to the target farm and the plurality of neighboring farms obtained from a plurality of data sources;
creating a graph-based digital twin network based on an interconnection among the digital twin for the target farm and the digital twin of each of the plurality of neighboring farms, wherein the graph-based digital twin network comprises a plurality of nodes and a plurality of weighted edges, and wherein a specific node from the plurality of nodes represents the digital twin of the target farm and each of a plurality of remaining nodes from the plurality of nodes represents each of the plurality of neighboring farms, and wherein each of the plurality of weighted edges represent (i) one or more relationships, (ii) one or more inter-farm dependencies, and (iii) one or more cascading risk propagation pathways among the target farm and each of the plurality of neighboring farms in the graph-based digital twin network;
predicting a plurality of risk scenarios for the target farm and each of the plurality of neighboring farms using (i) one or more Artificial Intelligence (AI) based models and (ii) a Generative Artificial Intelligence (GenAI) based model, wherein (i) the one or more AI based models and the GenAI based model utilize a plurality of historical and real-time data streams obtained from the graph-based digital twin network for predicting the plurality of risk scenarios;
generating a dynamic risk profile for the target farm and each of the plurality of neighboring farms based on (i) the plurality of predicted risk scenarios and (ii) the plurality of real-time data streams obtained from the graph-based digital twin network, which is dynamically updated, wherein the dynamic risk profile focuses on continuously assessing one or more risk levels associated with the target farm and each of the plurality of neighboring farms based on one or more risk parameters;
generating one or more risk mitigation advisory recommendations based on the dynamic risk profile, wherein the one or more risk mitigation advisory recommendations are dynamically updated based on (i) one or more observed compliance patterns received based on the monitoring and surveillance and (ii) one or more real-time changes in one or more risk conditions that enable one or more stakeholders to take one or more preemptive actions;
computing a dynamically adjusted insurance premium amount based on (i) the dynamic risk profile of the target farm and (ii) a farm user compliance to take the one or more preemptive actions in accordance with the one or more risk mitigation advisory recommendations;
generating a confidence score for one or more insurance claim requests received from the one or more farm users for the target farm based on the dynamic risk profile, a network-wide risk propagation, and the farm user compliance with the one or more risk mitigation advisory recommendations; and
validating the one or more insurance claim requests based on the confidence score to identify one or more fraudulent insurance claim requests.

12. The one or more non-transitory machine-readable information storage mediums as claimed in claim 11, an effectiveness of the one or more risk mitigation advisory recommendations is continuously evaluated by comparing (i) one or more pre-risk mitigation advisory recommendation conditions and (ii) one or more post-risk mitigation advisory recommendation conditions, using a feedback loop mechanism.

13. The one or more non-transitory machine-readable information storage mediums as claimed in claim 12, wherein the feedback loop mechanism utilizes (i) one or more Reinforcement Learning (RL) models and (ii) one or more evaluation metrics to evaluate the effectiveness of the one or more risk mitigation advisory recommendations.

14. The one or more non-transitory machine-readable information storage mediums as claimed in claim 11, wherein the dynamically adjusted insurance premium amount utilizes one or more real-time network influence effects for dynamically adjusting the dynamic risk profile of the target farm based on each of the plurality of weighted edges.

15. The one or more non-transitory machine-readable information storage mediums as claimed in claim 11, wherein the farm user compliance to take the one or more preemptive actions is continuously monitored using at least one of one or more sensors, one or more image acquisition devices, and one or more mobile applications.
